(19) Europäisches Patentamt
European Patent Office
Office européen des brevets

(11) EP 2 025 425 B1

# (12) EUROPEAN PATENT SPECIFICATION

(45) Date of publication and mention of the grant of the patent:
**21.09.2011 Bulletin 2011/38**

(51) Int Cl.:
***B21D 22/20*** *(2006.01)* ***B21D 24/10*** *(2006.01)*
***G05B 19/00*** *(2006.01)*

(21) Application number: **08166444.3**

(22) Date of filing: **10.11.2004**

(54) **Press-forming method, press-forming device, computer program product and computer readable recording medium**

Pressformungsverfahren, Pressformungsvorrichtung, Computerprogrammprodukt und computerlesbares Aufzeichnungsmedium

Procédé de formation de presse, dispositif de formation de presse, produit de programme informatique et support d'enregistrement lisible sur ordinateur

(84) Designated Contracting States:
**AT BE BG CH CY CZ DE DK EE ES FI FR GB GR HU IE IS IT LI LU MC NL PL PT RO SE SI SK TR**

(30) Priority: **11.11.2003 JP 2003381285**
**10.09.2004 JP 2004264022**

(43) Date of publication of application:
**18.02.2009 Bulletin 2009/08**

(60) Divisional application:
**10181813.6 / 2 289 644**

(62) Document number(s) of the earlier application(s) in accordance with Art. 76 EPC:
**04818248.9 / 1 688 196**

(73) Proprietors:
- **Nippon Steel Corporation**
**Tokyo 100-8071 (JP)**
- **ArcelorMittal France**
**93200 Saint Denis (FR)**

(72) Inventors:
- **Suzuki, Noriyuki**
**Futtsu-shi Chiba 293-8511 (JP)**
- **Yamagata, Mitsuharu**
**Futtsu-shi Chiba 293-8511 (JP)**
- **Uenishi, Akihiro**
**Futtsu-shi Chiba 293-8511 (JP)**
- **Kuwayama, Takuya**
**Futtsu-shi Chiba 293-8511 (JP)**
- **Niwa, Toshiyuki**
**Futtsu-shi Chiba 293-8511 (JP)**
- **Kuriyama, Yukihisa**
**Futtsu-shi Chiba 293-8511 (JP)**

(74) Representative: **Vossius & Partner**
**Siebertstrasse 4**
**81675 München (DE)**

(56) References cited:
**EP-A1- 0 675 419** **JP-A- 5 285 554**
**JP-A- 7 266 100** **US-A1- 4 592 220**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 025 425 B1

## Description

### Technical Field

The present invention relates to a press-forming device, a press-forming method, a computer program and a storage medium, and in particular, relates to a suitable technology to be used for a favorable processing irrespective of characteristic deviation of various metal materials such as iron series, nonferrous series, stacked materials and the like, or environmental fluctuations during processing.

### Background Art

Conventionally, when performing deep-drawing, bending, cutting, or the like to a metal material, using a press-forming device, it is usual to carry out actual production after determining appropriate forming conditions, namely, processing conditions such as the shape of metal molds, lubricating condition, forming speed, blank holding force, the temperature of metal molds and work, and so on for every metal material in advance by trial production through experience, or through experiment, or by simulation or the like using a finite-element method.

Whereas, various metal materials being a raw material are plates, pipes, bars, wires, powder or grains, and the like obtained through multiple processes of melting-smelting-casting-rolling-heat treatment-secondary processing and so on from raw material or scraps, and there inevitably exists some extent of deviation in mechanical properties in a product due to fluctuation of chemical components, or fluctuation of processing conditions such as uneven temperatures.

Accordingly, even when appropriate forming conditions are determined in advance as described above, occurrence of forming defect may arise due to differences in formability according to material positions or production lot numbers. In order to avoid this defect, execution of quality control during material production process is performed more severely, but excess severity may lead to material cost increase, and is not recommendable.

Moreover, even when the mechanical characteristics of raw material are identical, occurrence of forming defect may arise due to environmental fluctuation during processing such as temperature change of metal mold caused by continuous operation, abrasion of metal mold, fluctuation of atmospheric temperature or humidity.

As a countermeasure against these disadvantages, various inventions for a press-forming method to control processing conditions according to metal material or conditions of a metal mold have been disclosed. For instance, in Patent Document 1, disclosed is a device to control air pressure in an air cylinder to carry out press-forming under an appropriate blank holding force by determining in advance a relation between a physical quantity such as a shape of press material and its mechanical property, chemical property, a laminate layer property of plating or the like, and surface conditions such as oil quantity or the like; and an appropriate blank holding force from which prescribed press quality is obtained; and by determining the appropriate blank holding force according to actual physical quantity from the above-described relation.

Patent Documents 2 and 3 disclose a device which adjusts press conditions based on machine information and metal mold information peculiar to a press machine.

Patent Documents 4, 5, and 6 disclose various methods to adjust to prescribed bending angles in a bending process using a press brake.

The inventions disclosed in Patent Documents 1 to 3 and the like are aimed at controlling blank holding force based on material characteristics, information peculiar to a machine, and metal mold information. However, since lubrication characteristics, especially with metal molds, vary from moment to moment by the synergistic effect of the fluctuation of material characteristics and the fluctuation of machine and mold conditions, it is very difficult to estimate it in advance.

The inventions disclosed in Patent Documents 4 to 6 are aimed at adjusting the processing conditions according to the state of deformation during processing of the work in a bending process, but it is difficult to measure complicated three-dimensional shape on the spot in drawing or cutting. Further, since material is cramped with a metal mold during drawing or cutting, there have been very difficult problems in measuring the material shape precisely.

EP 0 675 419 A discloses a method for optimizing an operating condition of a press, wherein an optimum blank-holding force is automatically adjusted by adjusting a measurable control parameter such as air cylinder pressure to an optimum value. The optimum pressure is automatically adjusted when the ambient temperature has been changed.

The present invention has been made in view of the above-described problems, and the object of the invention is to find a method to perform satisfactory press-forming while compensating deviation of various material characteristics and environmental fluctuation during processing.

Patent Document 1: Japanese Patent Application Laid-open No. Hei 7-266100
Patent Document 2: Japanese Patent Application Laid-open No. Hei 5-285700
Patent Document 3: Japanese Patent Application Laid-open No. Hei 6-246499
Patent Document 4: Japanese Patent Application Laid-open No. Hei 7-265957

Patent Document 5: Japanese Patent Application Laid-open No. Hei 10-128451
Patent Document 6: Japanese Patent Application Laid-open No. Hei 8-300048

Summary of the Invention

The press-forming device and the method of the present invention are to obtain a satisfactory press molding product by grasping and computation controlling at least one or more processing conditions which are conventionally difficult to estimate.
This is achieved with the features of the claims.

Brief Description of the Drawings

Fig. 1 is a view showing a diagrammatic structure of a press-forming device of an embodiment;
Fig. 2 is a flow chart showing a procedure of the press-forming;
Fig. 3 is a view showing an example of an influence function matrix relating to material characteristics and standard processing conditions;
Fig. 4 is a view showing an example of an influence function matrix relating to state variables and corrected processing conditions;
Fig. 5 is a view showing an example of reference values of material characteristics;
Fig. 6 is a view showing an example of standard processing conditions;
Fig. 7 is a view showing another example of an influence function matrix relating to material characteristics and standard processing conditions;
Fig. 8 is a view showing an example of reference values of state variables;
Fig. 9 is a view showing another example of an influence function matrix relating to state variables and corrected processing conditions;
Fig. 10 is a view showing an example to attach an IC tag to a cut plate package;
Fig. 11 is a view showing an example to attach an IC tag to a material coil;
Fig. 12 is a view showing an example to attach a bar code to a cut plate material; and
Fig. 13 is a characteristic figure showing a relation between punch reaction and blank holding force.

Detailed Description of the Preferred Embodiments

- First Embodiment-

Hereinafter, preferable embodiments of a press-forming device, a press-forming method, a computer program, and a storage medium of the present invention will be explained referring to the drawings. Fig. 1 shows a diagrammatic structure of a press-forming device of an embodiment to which the present invention is applied.
More concretely, in a press-forming device 5, "1" denotes a punch, "2" denotes a die, "3" denotes a blank holder, and "6" denotes a metal mold device. "7" denotes a state variable sensor (load cell), and other than these, there is provided a state variable sensor (a thermocouple). "10" denotes an air cylinder, "11" denotes a hydraulic cylinder, and "12" denotes a heater.
"15" denotes a material characteristic reader which includes a material characteristic reader (IC tag reader) 9 and a material characteristic reader (controller) 14.
"13" denotes a hydraulic controller. "16" denotes a state variable detection device. "17" denotes a blank holding force controller.
"22" denotes a control computer, which includes a standard material characteristic storage device 18, a reference state variable storage device 19, a standard processing condition storage device 20, and an arithmetic unit 21. The control computer 22 of the present embodiment is composed of a computer system including a CPU, a RAM and a ROM, and a processing condition controller, a material characteristic input means, a state variable detector, a processing condition computer, a material characteristic measurement means, and the like of the present embodiment are programmed by the computer system.
A procedure of a press-forming method of the present embodiment will be explained next referring to Fig. 2. A metal material is read by the above-described material characteristic reader 15 from an IC tag (refer to Figs. 10 and 11) or a bar code (refer to Fig. 12) pasted on the surface of the metal material at a stage of being set to the press-forming device 5. The material characteristic information thus read is inputted by the material characteristic input means (Step S201). Here, the material characteristic is one kind or a combination of two or more kinds of the following characteristics:

sheet thickness, yield strength, 0.2% proof stress, tensile strength, elongation, n value, r value, coefficient of stress-strain relation equation, table showing each point value approximated to the stress-strain relation with a line graph, hardness, temperature, surface roughness, friction coefficient, and lubricant film thickness and so on for every material.

As a means to input material characteristics, the material characteristics are directly read here for every material from a bar code or an IC tag. When the amount of data is great, it is also adoptable to read an ID (identification) number from a bar code or an IC tag and receive the real valued data corresponding to the identification number from a server via a network or to input directly from a mill sheet, a flexible disc or the like attached from a material manufacturer for every coil material into the material characteristic input device.

In general, when performing press processing, since the material is cut in an appropriate size from, for instance, a coiled material before the material is set in a press machine, and heat treatment or surface treatment is given in some cases, it is often difficult to obtain the above-described material characteristic in advance.

For this problem, it is possible to obtain further precise material characteristic information by directly measuring one kind or combination of two or more kinds among the above-described material characteristics, or more preferably, from easiness of measurement, one kinds or a combination of two kinds or more out of sheet thickness, hardness, temperature, friction coefficient, and lubricant film thickness, before the material is set to a press-forming device 5 or just at the time of setting.

Then, initialization values of processing condition are corrected (Steps S202, and S203) based on the read material characteristic values and the reference material characteristic values to the material stored in the reference material characteristic storage device 18 in advance. Here, the processing condition is one kinds or a combination of two or more kinds of forming speed, blank holding force, and metal mold temperature.

A concrete correction method of a processing condition will be shown next. Material characteristic values to the respective material characteristics are taken respectively as P(j)(j = 1-M; where M is the number of the material characteristic values), the reference values for the respective material characteristics are taken as PO (j) (j = 1-M). The initialization values to the above-described respective standard processing conditions are taken respectively as CO(i) (i = 1-L, where L is the number of processing condition set values). An influence function matrix which indicates the relation between the deviation of the material characteristic of a material from its reference value and the amount of correction of the processing condition is taken as T1 (I, j), and the initialization value of the processing condition is corrected with the following equation (1).

$$CO(i)\ \text{(after correction)} = CO(i)\ \text{(initialization value)} \times (1+\Sigma\ (T1(ij) \times (P(j)/PO(j)-1)))\quad (i = 1\text{-}L,\ j = 1\text{-}M) \cdots (1)$$

The setting value CO(j) of the standard processing condition may be a fixed value during forming, and when it is changed during forming, for instance, a setting value to each punch stroke amount may be given. A formation example of the influence function matrix T1 is shown in Fig. 3. When the sheet thickness is, for instance, thicker than the reference value by 1%, the function of T1 corresponds to that the forming speed and blank holding force are increased by 0.2% and 0.4% respectively, and there is no change for the metal mold temperature, using the equation (1).

Each component of the influence function matrix can be determined from the following methods: a method to determine from the change (sensibility analysis) of the optimum forming condition to the change of various material characteristics using a forming simulation by a finite element method; a method to statistically determine from a relation between material characteristic variation and processing condition, product quality (cracks, creases, spring back, surface distortion, and the like) in actual mass production press process; a method to input actual measurement value on product quality into the press-forming device as instruction data and prepare and update using, for instance, a learning function by a neural network; or the like. Note that formation of material characteristic value and processing condition or formulation method is not limited to the above, and arbitral setting is also adoptable.

Then, based on initial processing conditions, using the blank holding force controller, a forming speed controller, and a metal mold temperature controller, a load is applied on the blank holder, an upper metal mold is descended and forming is started (Step S204). Note that controllers are not limited to these, other controlling means, either single or a combination of multiple means, any arbitrary form is adoptable.

During processing, using the state variable detection device 16, at least one state variable out of punch reaction, metal mold temperature, metal mold distortion amount, work piece deformation amount, work piece temperature, and the like is measured, and the processing condition is corrected from moment to moment by a processing condition computer (Steps S205 to S208).

Concretely, processing conditions are corrected from moment to moment according to the following equation (2),

$$C(i) = CO(i) \times (1 + \Sigma\ (T2(i,k) \times (S(k)/SO(k) - 1)))\ (i = 1\text{-}L,\ k = 1\text{-}N) \cdots (2)$$

where the state variable is S(k) (k = 1-N; where N is the number of the state variable), reference state variable stored in the reference state variable storage device is SO(k) (k = 1-N), correction values for the respective processing condition is C(i) (i = 1-L), the influence function matrix indicating a relation between deviation of measured each state variable to its reference value and correction amount of the processing condition is T2(i, k) (i = 1-L, k = 1-N).

A formation example of the influence function matrix T2 is shown in Fig. 4. When the punch reaction is, for instance, higher than the reference value by 1%, the function of the influence function matrix T2 corresponds to that, using the above-described equation (2), the forming speed and blank holding force are decreased by 1% and 0.5% respectively and there is no change for the metal mold temperature. It has been known that each component of the influence function matrix T2 can be determined from a method to determine from the change (sensibility analysis) of the optimum forming condition to the change of various material characteristics using a forming simulation by a finite element method, similarly to the above-described influence.function matrix T1.

Further, there are a method to statistically determine from a relation between state variable variation and processing condition, product quality (crack, creases, spring back, surface distortion, and the like) in actual mass production press process, a method to input actual measurement value on product quality into the press-forming device as instruction data and prepare and update using, for instance, a learning function by a neural network, or the like. Note that formation of state variable or formulation method is not limited to the above, and arbitral setting is also adoptable.

Here, a method to correct the forming conditions based on three pieces of information on the material characteristic inputted in advance, the material characteristic measured just before the press-forming, and the state variable during forming is explained. It is insufficient to correct the forming conditions based on only one piece of information out of three pieces of the above-described information, therefore it is desirable to do so based on at least two or more pieces of information to perform highly reliable control.

Because it is impossible to avoid influence of disturbance which is difficult to predict in advance such as a lubrication condition during forming or the like with only one piece of information of material characteristic inputted in advance or material characteristic measured just before press-forming. Furthermore, there is a problem in that it is impossible to separate influence due to material characteristic deviations with only the state variable during forming. This is because reduction effect of material characteristic deviations or product quality deviations caused by disturbance during forming cannot be obtained satisfactorily.

-Embodiment-

As an embodiment of the present invention, a press-forming device shown in Fig. 1 is prepared and press-forming is performed using a thin steel plate. As for material characteristics, sheet thickness and hardness are measured for every blank, and typical mechanical properties attached by a material manufacturer for every coil are used for yield strength or 0.2% proof stress, tensile strength, and total elongation and inputted into a material characteristic input means for every blank respectively. As a state variable during forming, a punch reaction is monitored using a load cell, the metal mold temperature is monitored using a thermocouple and the forming speed, blank holding force are controlled based on the equations (1) and (2).

In the above-described procedure, 4 points of sheet thickness, yield strength, 0.2% proof stress, tensile strength, total elongation, and hardness are used as the material characteristic value P(j) (j = 1-5), two points of forming speed, and blank holding force are used as the processing condition C(i) (i = 1-2), and N points of punch reaction (N-1 point) for every punch stroke and metal mold temperature are used as the state variable S(k) (k = 1-N).

As a raw material, a "150 mm" blank stamped from the same cold rolling coil for deep drawing having an average thickness of 1.2 mm and a width of 1000 mm is used to perform "50 mm" square cup drawing with a forming height of "40 mm". Typical mechanical properties and the reference values of the coil are shown in Fig. 5.

Standard processing conditions for the typical characteristics of this material are shown in Fig. 6. Then, based on the actual measurement value for the sheet thickness and the typical mechanical properties of the coil inputted for every one sheet of the blank, initialization of the processing conditions are performed using the influence function matrix T1 shown by the equation (1) and in Fig. 7 and forming is started.

During processing, forming is performed without changing the initialization during forming in example 1, in other words, forming conditions are set based on the material characteristics inputted in advance and the material characteristics measured before forming, and forming is performed without using a state variable during forming, and the forming speed and blank holding force set to be constant.

In example 2, the punch reaction and the metal mold temperature are measured for every 10 mm stroke until the maximum punch stroke (=forming height 40 mm), taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics inputted in advance, the material characteristics measured before forming, and the state variable during forming.

In example 3, using measured value of only sheet thickness and hardness for every one blank sheet, without using material characteristics such as yield strength or 0.2% proof stress, tensile strength, and total elongation, the punch reaction and the metal mold temperature are measured for every 10 mm stroke until the maximum punch stroke (=forming height 40 mm) similarly to the manner in embodiment 2, taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics measured before forming, and the state variable during forming.

In example 4, using only material characteristics inputted in advance: yield strength or 0.2% proof stress, tensile strength, and total elongation, similarly to embodiment 2, the punch reaction and the metal mold temperature are measured for every 10 mm stroke until the maximum punch stroke (=forming height 40 mm), taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics inputted in advance, and the state variable during forming.

As a comparison example, using forming speed and blank holding force without changing processing conditions to the reference material characteristics, forming is performed without correcting the reference processing conditions during forming.

The above-described forming experiment is carried out by punching total 1000 pieces of blanks from the same coil, percent defective due to occurrence of cracks and creases are compared.
sheet thickness standard deviation : 5 μm
percent detective :

| | |
|---|---|
| (Example 1) | 0.9% |
| (Example 2) | 0.1% |
| (Example 3) | 0.5% |
| (Example 4) | 0.5% |
| (Comparative Example) | 1.2% |

The percent defective is reduced by changing the initialization of the processing conditions according to the deviation of the sheet thickness, and the percent defective is further reduced by adjusting the processing condition according to punch reaction and metal mold temperature during forming.

Fig. 10 shows an example of a cut plate package 100 supplied from a coil processing center, to which an IC tag 101 is attached. Information such as "tensile strength", "yield strength or 0.2% proof stress", "total elongation", "sheet thickness", "production date" and the like are stored in the IC tag 101. The information is read with the material characteristic reader (IC tag reader) 9, and is transmitted to the computation device 21, thereby saving the labor that would otherwise be incurred if the data were inputted manually.

Fig. 11 shows an example to attach an IC tag 111 to a material coil 110. Also in the case of this example, information such as "tensile strength", "yield strength or 0.2% proof stress", "total elongation", "sheet thickness", "production date" and the like is stored in the IC tag 111. Therefore, it becomes possible to save labor to manually input the material characteristics when the material coil 110 is pressed.

Fig. 12 shows an example to attach a bar code 121 to a cut plate material 120. Information showing a product lot number is displayed on the bar code 121. By reading the information with a bar code reader in the material characteristics reader, information relating to the corresponding material can be obtained from, for instance, a server computer on a network.

Next, an example in the case of performing press-forming is explained with reference to Fig. 13. In Fig. 13, punch reactions and blank holding forces are expressed along the vertical axis, and the number of forming times is expressed along the horizontal axis. In Fig. 13, a black rhombus denotes a punch reaction during one time of forming.

In this example, the punch reaction maximum value during forming is captured and stored in a computer for every one time of forming. Further, the moving average of the punch reaction maximum values is calculated and an example of controlling to change the blank holding force when the punch reaction maximum value exceeds a prescribed value (in an example in Fig. 13, 500 ton ± 10 ton) is shown.

As a result, as shown in Fig. 13, since the 10 points moving average value exceeds a permissible range, forming is carried out under reduced blank holding force from fiftieth times. As a result, the punch reaction maximum value can be kept within the prescribed value, forming of prescribed number of sheets can be achieved without occurrence of a defective piece.
It should be noted that in the above explanation, an example in which the punch reaction maximum value during processing is taken in a computer for every one time of forming is shown, but it may be taken in for every prescribed time. Furthermore, in an example in Fig. 13, an example in which the blank holding force is reduced from the fiftieth times because the 10 point moving average exceeds a permissible range is shown, however, on the contrary, the blank holding force may be increased when the moving average value falls short of the permissible range.
In the above explanation, the blank holding force is adjusted using the history of the punch reaction maximum values. However, the present invention is not limited to this, and it is also adoptable to adjust other processing condition, for instance, the forming speed or the like using a history of other state variables for instance, the metal mold temperature, the metal mold distortion amount, or the like.

-Other Embodiments-

As explained above, the control computer 22 includes a computer CPU or MPU, RAM, ROM, RAM, and the like, and a press-forming method of the present embodiment is realized by operating a program stored in the above-described RAM, ROM, or the like.
Accordingly, the program itself realizes the function of the above-described embodiment, which constitutes the present invention. As a program transmission medium, a communication medium (wire circuit such as optical fiber or wireless circuit or the like) in a computer net work system (LAN, WAN such as internet, wireless communication network or the like) to propagate and supply program information as a carrier wave can be used.
Further, a means supplying the above-described program to a computer, for instance, a storage medium storing such a program composes the present invention. As such a storage medium, for instance, a flexible disc, hard disc, optical disc, magneto-optic disc, CD-ROM, magnetic tape, nonvolatile memory card, ROM, or the like can be used.
The present embodiments are to be considered in all respects as illustrative, and all changes which come within the scope of the claims are therefore intended to be embraced therein.

<u>Industrial Applicability</u>

According to the present invention, it is possible to obtain appropriate processing conditions avoiding an influence due to unpredictable deviation factors such as variation in material characteristics, environmental change, lubricity between a metal mold and work, surface property, and the like, and it is possible to always obtain a favorable product.

## Claims

**1.** A press-forming method using a press-forming device having a punch (1), die (2) and blank holder (3), and press-forming a material according to a prescribed forming condition, comprising the steps of:

measuring at least one or more state variables during processing out of the state variables of punch reaction, metal mold temperature, metal mold distortion amount, work piece deformation amount, or work piece temperature, for every forming of the material; **characterised in that** the method further comprises the steps of:

calculating a moving average of measured values during processing with respect to one or more of the state variables within a prescribed time or for a prescribed number of times, and computing at least one processing condition out of one kind or two or more kinds of processing condition of forming speed, blank holding force, or metal mold temperature according to comparison result of the moving average and a prescribed value;
controlling at least one or more processing conditions out of the processing conditions including a punch or die movement speed, metal mold temperature or blank holding force based on the processing conditions computed by the processing condition computation step.

**2.** The press-forming method according to claim 1, further comprising the steps of:

inputting at least one material characteristic out of the material characteristics of sheet thickness, yield strength, 0.2% proof stress, tensile strength, elongation, n value, r value, stress-strain relation equation, hardness, temperature, surface roughness, friction coefficient, or lubricant film thickness, of the material,
wherein said processing condition computation step computes at least one processing condition out of the processing conditions of forming speed, blank holding force, or metal mold temperature from material characteristics inputted by said material characteristic input process and from state variables of the material for every forming processing measured by said state variable detection step.

**3.** The press-forming method according to claim 1, wherein
in the measuring, a punch reaction maximum value during processing is measured, for every forming of the material, and
in the calculating and computing, a moving average of the measured punch reaction maximum values is calculated, and the blank holding force is computed according to comparison result of the moving average and a prescribed value.

**4.** A press-forming device having a punch (1), die (2) and blank holder (3), and press-forming a material according to a prescribed forming condition, comprising:

a state variable detector (16) for measuring during processing at least one or more state variables during processing out of the state variables of punch reaction, metal mold temperature, metal mold distortion amount, work piece deformation amount, or work piece temperature, for every forming of the material;
a processing condition computer **characterised in that** the processing condition computer calculates a moving average of measured values during processing with respect to one or more of the state variables within a prescribed time or for a prescribed number of times, and computing at least one processing condition out of one kind or two or more kinds of processing condition of forming speed, blank holding force, or metal mold temperature according to comparison result of the moving average and a prescribed value;
a processing condition controller for controlling at least one or more processing conditions out of the processing conditions including a punch or die movement speed, metal mold temperature or blank holding force based on the processing conditions computed by the processing condition computer.

**5.** The press-forming device according to claim 4, wherein
the state variable detector (16) is adapted to measure a punch reaction maximum value during processing is measured, for every forming of the material, and
the processing condition computer is adapted to calculate a moving average of the measured punch reaction maximum values,and to compute the blank holding force according to comparison result of the moving average and a prescribed value.

**6.** A computer program product to be used in a computer of a press-forming device having a pouch (1), die (2) and a blank holder, **characterised in that** when executed, causer the computer to perform a press-forming method according to any one of claims 1 to 3.

**7.** A computer readable recording medium on which a computer program product is recorded, **characterised in that** said computer program product is adapted, when executed in a computer of a press-forming device having a pouch (1), die (2) and a blank holder, to cause the computer to perform a press-forming method according to any one of claims 1 to 3.

## Patentansprüche

**1.** Pressformverfahren, das eine Pressformvorrichtung mit einem Stempel (1), einer Matrize (2) und einen Niederhalter (3) verwendet und ein Material gemäß einer vorgeschriebenen Umformbedingung pressformt, mit den Schritten:

während des Bearbeitens erfolgendes Messen mindestens einer oder mehrerer Zustandsvariablen aus den Zustandsvariablen Stempelreaktion, Metallformtemperatur, Metallformverformungsbetrag, Werkstückverformungsbetrag oder
Werkstücktemperatur für jedes Umformen des Materials, **dadurch gekennzeichnet, dass** das Verfahren ferner die Schritte aufweist:

während des Bearbeitens erfolgendes Errechnen eines gleitenden Mittelwerts im Hinblick auf eine oder mehrere der Zustandsvariablen in einer vorgeschriebenen Zeit oder mit einer vorgeschriebenen Häufigkeit und Berechnen mindestens einer Bearbeitungsbedingung aus einer Art oder zwei oder mehr Bearbeitungsbedingungsarten Umformgeschwindigkeit, Niederhaltekraft oder Metallformtemperatur gemäß einem Vergleichsergebnis des gleitenden Mittelwerts und eines vorgeschriebenen Werts;
Steuern mindestens einer oder mehrerer Bearbeitungsbedingungen aus den Bearbeitungsbedingungen, zu denen Stempel- oder Matrizenbewegungsgeschwindigkeit, Metallformtemperatur oder Niederhaltekraft gehören, auf der Grundlage der durch den Bearbeitungsbedingungs-Berechnungsschritt berechneten Bearbeitungsbedingungen.

**2.** Pressformverfahren nach Anspruch 1, ferner mit den Schritten:

Eingeben mindestens eines Materialkennwerts aus den Materialkennwerten Blechdicke, Streckgrenze, 0,2-%-Dehngrenze, Zugfestigkeit, Dehnung, n-Wert, r-Wert, Spannungs-Dehnungs-Beziehungsgleichung, Härte, Temperatur, Oberflächenrauheit, Reibungskoeffizient oder Schmierfilmdicke des Materials,
wobei der Bearbeitungsbedingungs-Berechnungsschritt mindestens eine Bearbeitungsbedingung aus den Bearbeitungsbedingungen Umformgeschwindigkeit, Niederhaltekraft oder Metallformtemperatur anhand von Materialkennwerten, die durch das Materialkennwert-Eingabeverfahren eingegeben werden, und anhand von Zustandsvariablen des Materials für jede Umformbearbeitung berechnet, die durch den Zustandsvariablen-Detektionsschritt eingegeben werden.

**3.** Pressformverfahren nach Anspruch 1, wobei beim Messen ein maximaler Stempelreaktionswert während der Bearbeitung für jedes Umformen des Materials gemessen wird, und
beim Errechnen und Berechnen ein gleitender Mittelwert der gemessenen maximalen Stempelreaktionswerte errechnet wird und die Niederhaltekraft gemäß einem Vergleichsergebnis des gleitenden Mittelwerts und eines vorgeschriebenen Werts berechnet wird.

**4.** Pressformvorrichtung, die einen Stempel (1), eine Matrize (2) und einen Niederhalter (3) hat und ein Material gemäß einer vorgeschriebenen Umformbedingung pressformt, mit:

einem Zustandsvariablendetektor (16) zum während des Bearbeitens erfolgenden Messen mindestens einer oder mehrerer Zustandsvariablen aus den Zustandsvariablen Stempelreaktion, Metallformtemperatur, Metallformverformungsbetrag, Werkstückverformungsbetrag oder Werkstücktemperatur für jedes Umformen des Materials,
einem Bearbeitungsbedingungscomputer, **dadurch gekennzeichnet, dass** der Bearbeitungsbedingungscomputer einen gleitenden Mittelwert von Messwerten während der Bearbeitung im Hinblick auf eine oder mehrere der Zustandsvariablen in einer vorgeschriebenen Zeit oder mit einer vorgeschriebenen Häufigkeit errechnet und mindestens eine Bearbeitungsbedingung aus einer Art oder zwei oder mehr Bearbeitungsbedingungsarten Umformgeschwindigkeit, Niederhaltekraft oder Metallformtemperatur gemäß einem Vergleichsergebnis des gleitenden Mittelwerts und eines vorgeschriebenen Werts berechnet;
einer Bearbeitungsbedingungssteuerung zum Steuern mindestens einer oder mehrerer Bearbeitungsbedingungen aus den Bearbeitungsbedingungen, zu denen Stempel- oder Matrizenbewegungsgeschwindigkeit, Metallformtemperatur oder Niederhaltekraft gehören, auf der Grundlage der Bearbeitungsbedingungen, die durch den Bearbeitungsbedingungscomputer berechnet werden.

**5.** Pressformvorrichtung nach Anspruch 4, wobei der Zustandsvariablendetektor (16) geeignet ist, einen maximalen Stempelreaktionswert während der Bearbeitung für jedes Umformen des Materials zu messen, und
der Bearbeitungsbedingungscomputer geeignet ist, einen gleitenden Mittelwert der gemessenen maximalen Stempelreaktionswerte zu errechnen und die Niederhaltekraft gemäß einem Vergleichsergebnis des gleitenden Mittelwerts und eines vorgeschriebenen Werts zu berechnen.

**6.** Computerprogrammprodukt, das in einem Computer einer Pressformvorrichtung mit einem Stempel (1), einer Matrize (2) und einem Niederhalter zu verwenden ist, **dadurch gekennzeichnet, dass** es bei Ausführung den Computer veranlasst, ein Pressformverfahren nach einem der Ansprüche 1 bis 3 durchzuführen.

**7.** Computerlesbares Aufzeichnungsmedium, auf dem ein Computerprogrammprodukt aufgezeichnet ist, **dadurch gekennzeichnet, dass** das Computerprogrammprodukt bei Ausführung in einem Computer einer Pressformvorrichtung mit einem Stempel (1), einer Matrize (2) und einem Niederhalter geeignet ist, den Computer zu veranlassen, ein Pressformverfahren nach einem der Ansprüche 1 bis 3 durchzuführen.

## Revendications

1. Procédé de formage à la presse utilisant un dispositif de formage à la presse comportant un poinçon (1), une matrice (2) et un support de pièce (3), et formant à la presse un matériau selon une condition de formage prescrite, comprenant les étapes consistant à :

    mesurer, pendant le traitement, au moins une ou plusieurs variables d'état parmi les variables d'état consistant en une réaction de poinçon, une température de moule métallique, une quantité de distorsion de moule métallique, une quantité de déformation de pièce de fabrication, ou une température de pièce de fabrication, pour chaque formage du matériau ; **caractérisé en ce que** le procédé comprend en outre les étapes consistant à :

        calculer une moyenne mobile de valeurs mesurées pendant le traitement en ce qui concerne une ou plusieurs des variables d'état dans un temps prescrit ou pour un nombre prédéterminé de fois, et calculer au moins une condition de traitement parmi un type ou deux types ou plus de types de conditions de traitement consistant en une vitesse de formage, une force de maintien de pièce, ou une température de moule métallique selon le résultat de comparaison de la moyenne mobile et d'une valeur prescrite ;
        commander au moins une ou plusieurs conditions de traitement parmi les conditions de traitement comprenant une vitesse de déplacement de poinçon ou de matrice, une température de moule métallique, ou une force de maintien de pièce, sur la base des conditions de traitement calculées à l'étape de calcul de condition de traitement.

2. Procédé de formage à la presse selon la revendication 1, comprenant en outre les étapes consistant à :

    entrer au moins une caractéristique de matériau parmi les caractéristiques de matériau consistant en une épaisseur de feuille, une limite d'élasticité, une limite d'allongement à 0,2 %, une résistance à la traction, un allongement, une valeur n, une valeur r, une équation de relation tension-allongement, une dureté, une température, une rugosité de surface, un coefficient de frottement, ou une épaisseur de film lubrifiant du matériau ;
    dans lequel ladite étape de calcul de condition de traitement calcule au moins une condition de traitement parmi les conditions de traitement consistant en une vitesse de formage, une force de maintien de pièce, ou une température de moule métallique à partir des caractéristiques de matériau entrées par le processus d'entrée de caractéristique de matériau et à partir des variables d'état du matériau pour chaque traitement de formage mesurées à ladite étape de détection de variable d'état.

3. Procédé de formage à la presse selon la revendication 1, dans lequel
lors de la mesure, une valeur maximum de réaction de poinçon pendant le traitement est mesurée, pour chaque formage du matériau, et
lors du calcul, une moyenne mobile des valeurs maximums de réaction de poinçon mesurées est calculée, et la force de maintien de pièce est calculée selon le résultat de comparaison de la moyenne mobile et d'une valeur prescrite.

4. Dispositif de formage à la presse comportant un poinçon (1), une matrice (2) et un support de pièce (3) et formant à la presse un matériau selon une condition de formage prescrite, comprenant :

    un détecteur de variable d'état (16) pour mesurer, pendant le traitement, au moins une ou plusieurs variables d'état parmi les variables d'état consistant en une réaction de poinçon, une température de moule métallique, une quantité de distorsion de moule métallique, une quantité de déformation de pièce de fabrication, ou une température de pièce de fabrication, pour chaque formage du matériau ;
    un calculateur de condition de traitement, **caractérisé en ce que** le calculateur de condition de traitement calcule une moyenne mobile des valeurs mesurées pendant le traitement en ce qui concerne une ou plusieurs des variables d'état dans un temps prescrit ou pour un nombre de fois prescrit, et calcule au moins une condition de traitement parmi un type ou deux types ou plus de types de conditions de traitement consistant en une vitesse de formage, une force de maintien de pièce, ou une température de moule métallique selon le résultat de comparaison de la moyenne mobile et d'une valeur prescrite ;
    un contrôleur de condition de traitement pour commander au moins une ou plusieurs conditions de traitement parmi les conditions de traitement comprenant une vitesse de déplacement de poinçon ou de matrice, une température de moule métallique, ou une force de maintien de pièce, sur la base des conditions de traitement calculées par le calculateur de condition de traitement.

5. Dispositif de formage à la presse selon la revendication 4, dans lequel
le détecteur de variable d'état (16) est conçu pour mesurer une valeur maximum de réaction de poinçon pendant le traitement, pour chaque formage du matériau, et
le calculateur de condition de traitement est conçu pour calculer une moyenne mobile des valeurs maximums de réaction de poinçon mesurées, et pour calculer la force de maintien de pièce selon le résultat de comparaison de la moyenne mobile et d'une valeur prescrite.

6. Produit-programme d'ordinateur à utiliser dans un ordinateur d'un dispositif de formage à la presse comportant un poinçon (1), une matrice (2) et un support de pièce, **caractérisé en ce que**, lorsqu'il est exécuté, il amène l'ordinateur à effectuer un procédé de formage à la presse selon l'une quelconque des revendications 1 à 3.

7. Support d'enregistrement pouvant être lu par un ordinateur, sur lequel un produit-programme d'ordinateur est enregistré, **caractérisé en ce que** ledit produit-programme d'ordinateur est conçu pour, lorsqu'il est exécuté dans un ordinateur d'un dispositif de formage à la presse comportant un poinçon (1), une matrice (2) et un support de pièce, amener l'ordinateur à effectuer un procédé de formage à la presse selon l'une quelconque des revendications 1 à 3.

FIG. 1

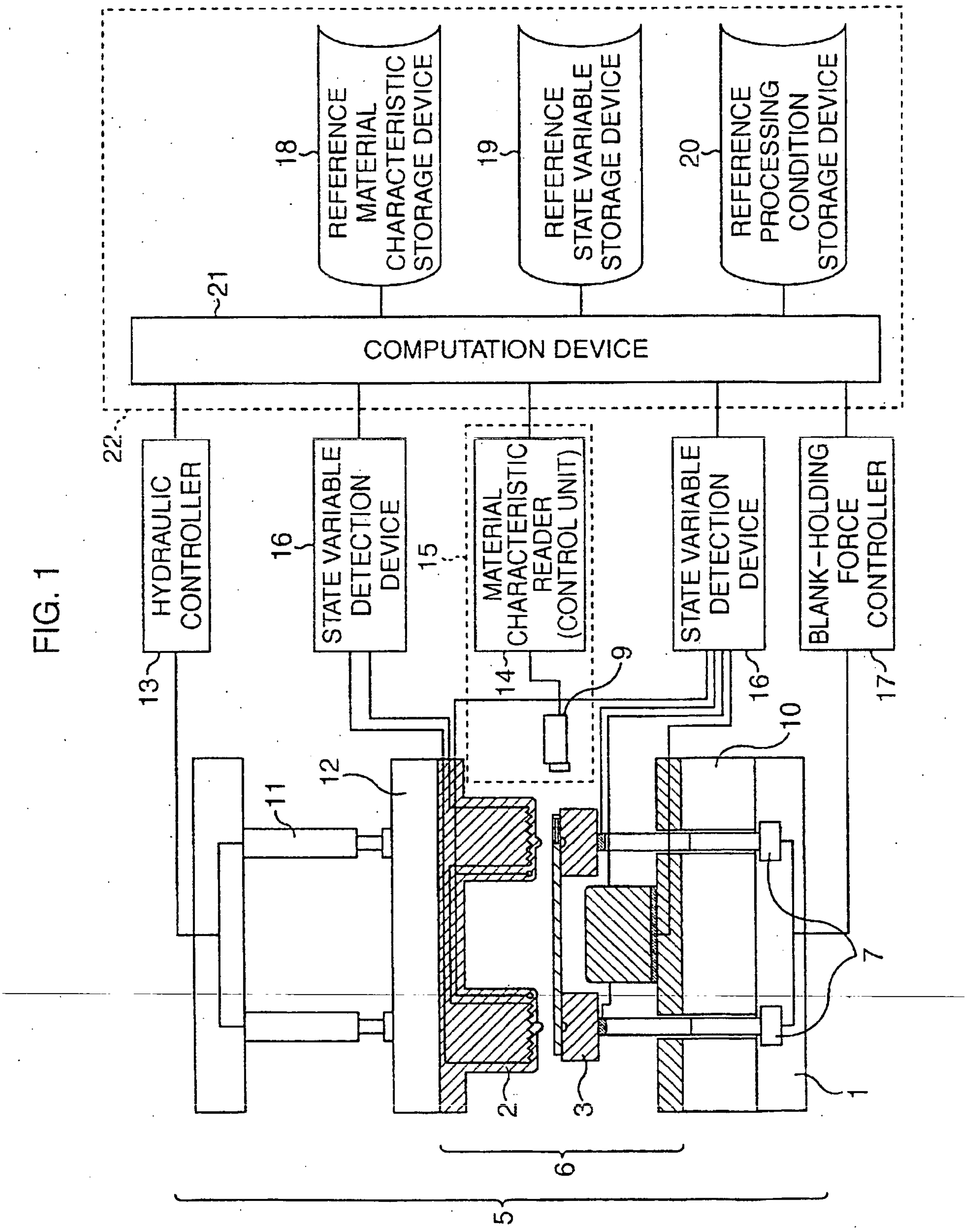
REFERENCE MATERIAL CHARACTERISTIC STORAGE DEVICE
REFERENCE STATE VARIABLE STORAGE DEVICE
REFERENCE PROCESSING CONDITION STORAGE DEVICE
COMPUTATION DEVICE
HYDRAULIC CONTROLLER
STATE VARIABLE DETECTION DEVICE
MATERIAL CHARACTERISTIC READER (CONTROL UNIT)
STATE VARIABLE DETECTION DEVICE
BLANK-HOLDING FORCE CONTROLLER
18
19
20
21
22
13
16
15
14
9
16
17
10
12
11
7
2
3
1
6
5

FIG. 2

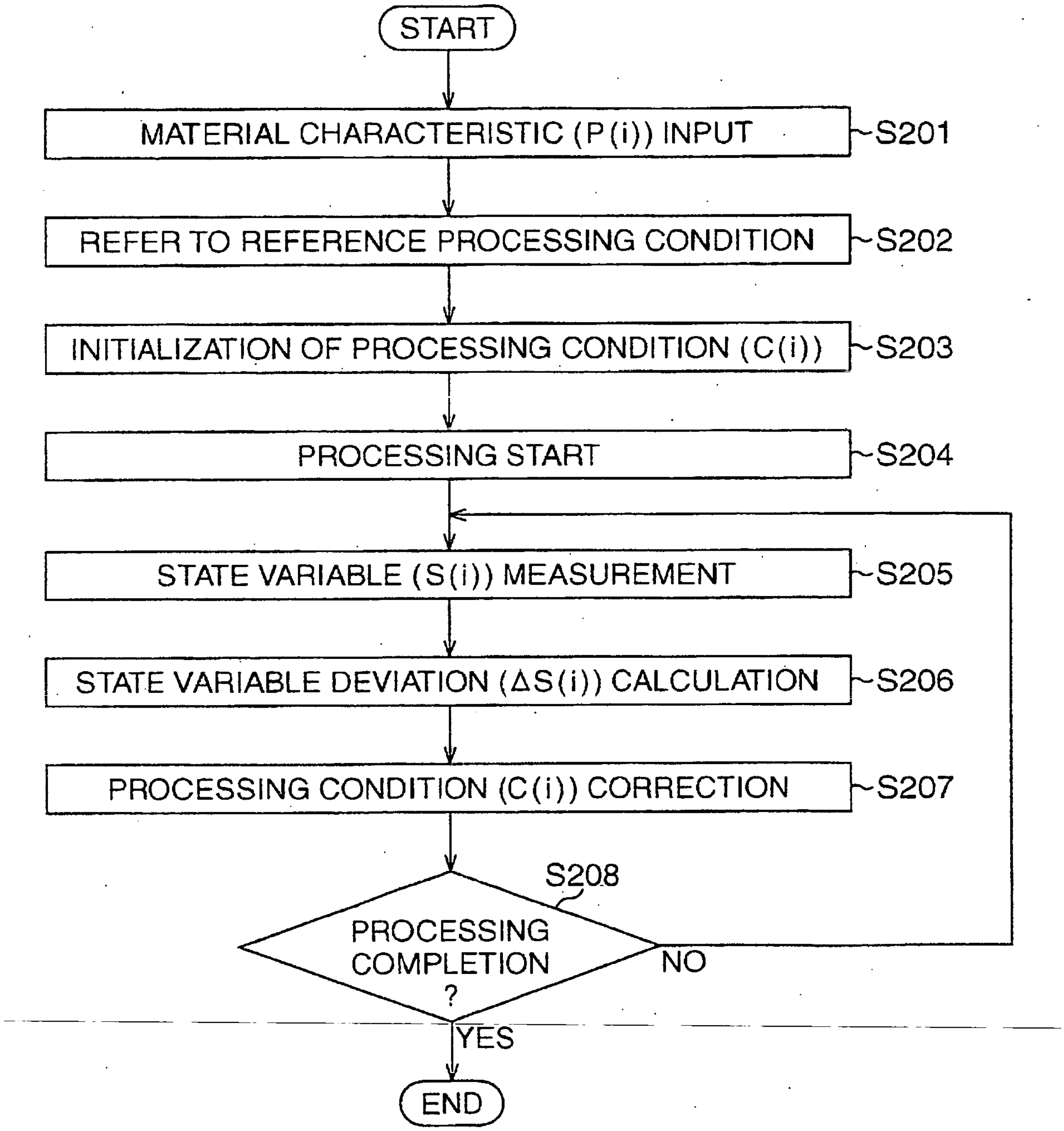
START
MATERIAL CHARACTERISTIC (P(i)) INPUT
S201
REFER TO REFERENCE PROCESSING CONDITION
S202
INITIALIZATION OF PROCESSING CONDITION (C(i))
S203
PROCESSING START
S204
STATE VARIABLE (S(i)) MEASUREMENT
S205
STATE VARIABLE DEVIATION (ΔS(i)) CALCULATION
S206
PROCESSING CONDITION (C(i)) CORRECTION
S207
S208
PROCESSING COMPLETION ?
NO
YES
END

FIG. 3

| | | MATERIAL CHARACTERISTIC VALUE (P) | | | | | | | | | | | | |
|---|---|---|---|---|---|---|---|---|---|---|---|---|---|---|
| | | SHEET THICKNESS | YIELD STRENGTH | TENSILE STRENGTH | ELONGATION | n VALUE | r VALUE | PLASTICITY COEFFICIENT | HARDNESS | TEMPERATURE | ROUGHNESS | FRICTION COEFFICIENT | LUBRICANT FILM THICKNESS | ...... |
| FORMING CONDITION INITIALIZATION VALUE (C0) | FORMING SPEED | 0.2 | 0.2 | 0.3 | 0.4 | 0.5 | 0.2 | 0.3 | 0.2 | −0.1 | −0.2 | −0.5 | 0.5 | *.* |
| | BLANK-HOLDING FORCE | 0.4 | 0.4 | 0.6 | 0.8 | 1.0 | 0.4 | 0.6 | 0.4 | −0.2 | −0.4 | −1.0 | 1.0 | *.* |
| | METAL MOLD TEMPERATURE | 0.0 | 0.0 | 0.0 | 0.0 | 0.0 | 0.0 | 0.0 | 0.0 | 0.0 | 0.0 | 0.0 | 0.0 | *.* |
| | ...... | *.* | *.* | *.* | *.* | *.* | *.* | *.* | *.* | *.* | *.* | *.* | *.* | *.* |

FIG. 4

| | | STATE VARIABLE (S) | | | | | | | | | |
|---|---|---|---|---|---|---|---|---|---|---|---|
| | | PUNCH REACTION | METAL MOLD TEMPERATURE | METAL MOLD DISTORTION No.1 | METAL MOLD DISTORTION No.2 | METAL MOLD DISTORTION No.3 | DISPLACEMENT No.1 | DISPLACEMENT No.2 | DISPLACEMENT No.3 | MATERIAL TEMPERATURE | ...... |
| FORMING CONDITION CORRECTION AMOUNT (C) | FORMING SPEED | −1.0 | −0.5 | −0.2 | −0.2 | −0.2 | −0.2 | −0.2 | −0.2 | −0.5 | * * |
| | BLANK-HOLDING FORCE | −1.0 | −0.5 | −0.2 | −0.2 | −0.2 | −0.2 | −0.2 | −0.2 | −0.5 | * * |
| | METAL MOLD TEMPERATURE | 0.0 | −1.0 | 0.0 | 0.0 | 0.0 | 0.0 | 0.0 | 0.0 | 1.0 | * * |
| | ...... | * * | * * | * * | * * | * * | * * | * * | * * | * * | * * |

FIG. 5

| | P(1) (SHEET THICKNESS /mm) | P(2) (YIELD STRENGTH /MPa) | P(3) (TENSILE STRENGTH /MPa) | P(4) (TOTAL ELONGATION /%) | P(5) (HARDNESS /Hv) |
|---|---|---|---|---|---|
| COIL TYPICAL MECHANICAL PROPERTIES | 1.175~ 1.225 | 145 | 285 | 43 | 145 |
| REFERENCE VALUE | 1.200 | 140 | 280 | 42 | 140 |

FIG. 6

| STANDARD PROCESSING CONDITION | VALUE |
|---|---|
| C0 (1) (FORMING SPEED) | 50mm/sec. |
| C0 (2) (BLANK-HOLDING FORCE) | 50kN |

FIG. 7

| | P(1) (SHEET THICKNESS) | P(2) (YIELD STRENGTH) | P(3) (TENSILE STRENGTH) | P(4) (TOTAL ELONGATION) | P(5) (HARDNESS) |
|---|---|---|---|---|---|
| C0 (1) (FORMING SPEED) | 0.2 | 0.2 | 0.3 | 0.4 | 0.2 |
| C0 (2) (BLANK-HOLDING FORCE) | 0.4 | 0.4 | 0.6 | 0.8 | 0.4 |

FIG. 8

| | S(1) PUNCH REACTION 10mm | S(2) PUNCH REACTION 20mm | S(3) PUNCH REACTION 30mm | S(4) METAL MOLD TEMPERATURE (AT FORMING START) |
|---|---|---|---|---|
| REFERENCE VALUE | 20kN | 40kN | 65kN | 30°C |

FIG. 9

| | S(1) PUNCH REACTION 10mm | S(2) PUNCH REACTION 20mm | S(3) PUNCH REACTION 30mm | S(4) METAL MOLD TEMPERATURE (AT FORMING START) |
|---|---|---|---|---|
| C(1) (FORMING SPEED) | −1.0 | −1.0 | −1.0 | −0.5 |
| C(2) (BLANK−HOLDING FORCE) | −1.0 | −1.0 | −1.0 | −0.5 |

FIG. 10

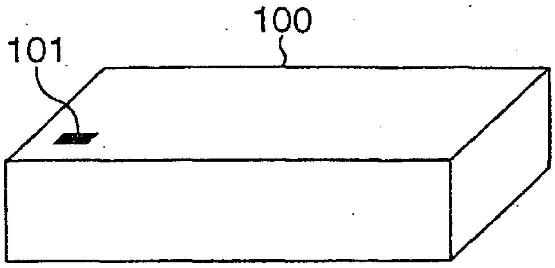


FIG. 11

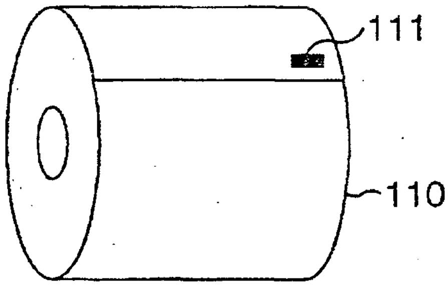

FIG. 12

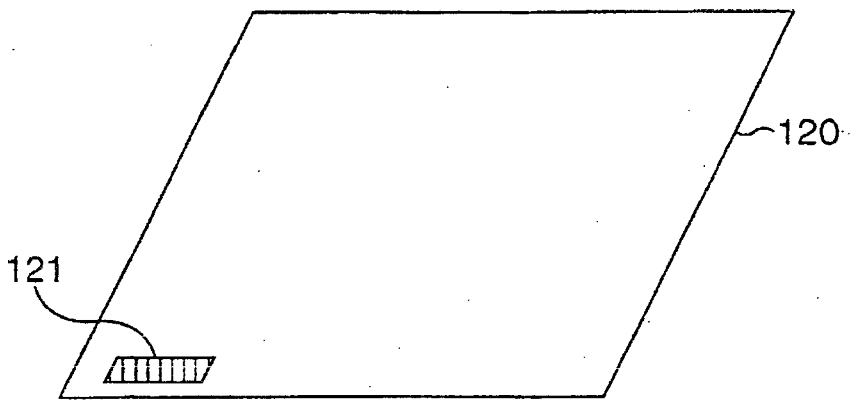

FIG. 13

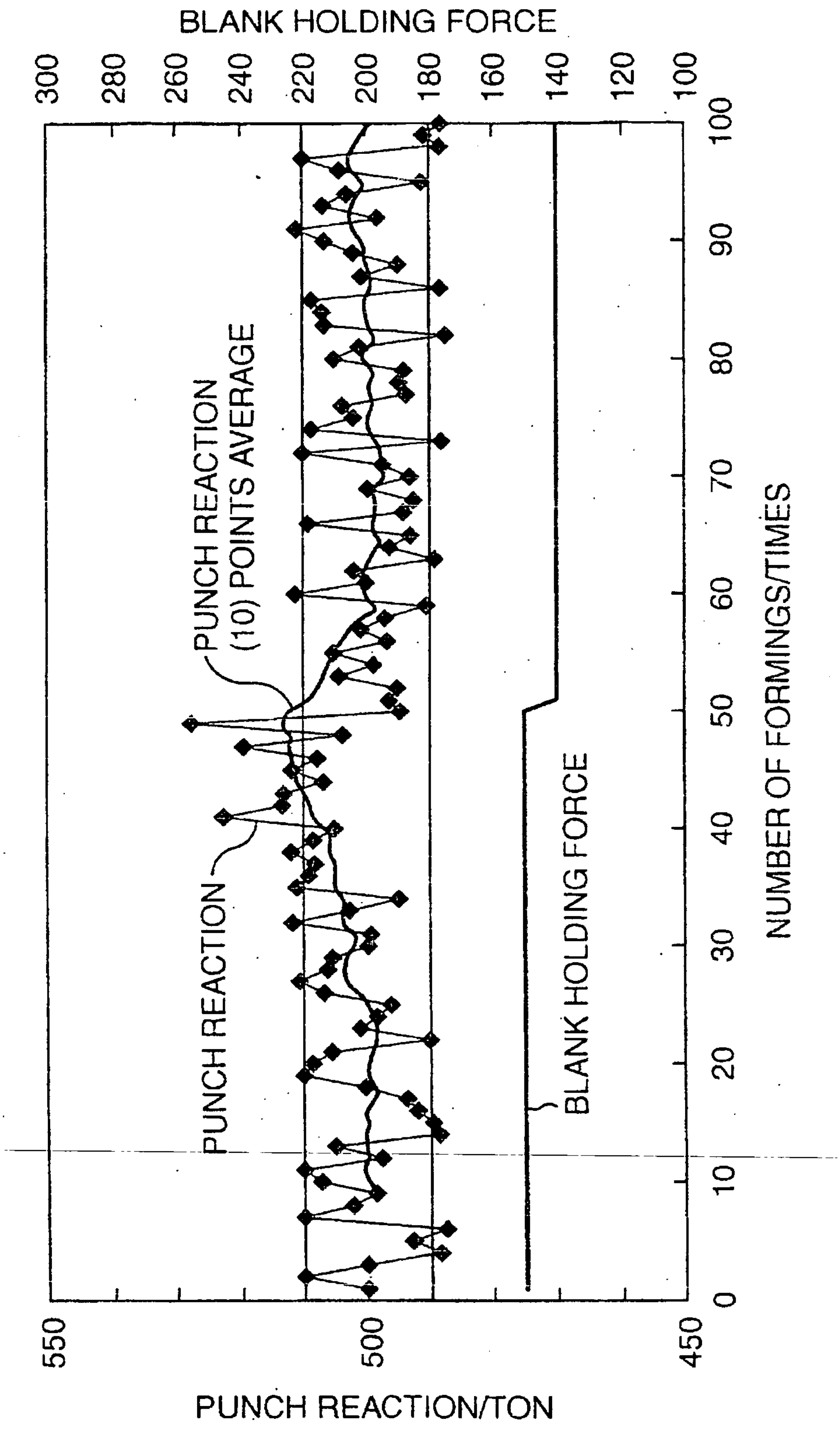
BLANK HOLDING FORCE
300
280
260
240
220
200
180
160
140
120
100
PUNCH REACTION
(10) POINTS AVERAGE
PUNCH REACTION
BLANK HOLDING FORCE
NUMBER OF FORMINGS/TIMES
0
10
20
30
40
50
60
70
80
90
100
550
500
450
PUNCH REACTION/TON

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0675419 A
- JP HEI7266100 B
- JP HEI5285700 B
- JP HEI6246499 B
- JP HEI7265957 B
- JP HEI10128451 B
- JP HEI8300048 B